Europäisches Patentamt

European Patent Office

Office européen des brevets

(11) Veröffentlichungsnummer : **0 142 681**
**B1**

(12) **EUROPÄISCHE PATENTSCHRIFT**

(45) Veröffentlichungstag der Patentschrift :
21.01.87

(51) Int. Cl.⁴ : **D 03 C 1/00**, F 16 D 11/00,
F 16 H 21/18

(21) Anmeldenummer : 84111631.2

(22) Anmeldetag : 28.09.84

(54) Hubeinheit einer Rotations-Schaftmaschine.

(30) Priorität : 07.10.83 CH 5477/83

(43) Veröffentlichungstag der Anmeldung :
29.05.85 Patentblatt 85/22

(45) Bekanntmachung des Hinweises auf die Patenterteilung : 21.01.87 Patentblatt 87/04

(84) Benannte Vertragsstaaten :
CH DE FR GB IT LI

(56) Entgegenhaltungen :
CH-A- 512 605
DE-B- 2 036 643
DE-B- 2 938 451
DE-B- 3 001 310
FR-A- 2 171 956

(73) Patentinhaber : Stäubli AG (Stäubli SA) (Stäubli Ltd.)
Seestrasse 240
CH-8810 Horgen-Zürich (CH)

(72) Erfinder : Schwarz, Rudolf
Bergstrasse 37
Horgen-Zürich (CH)

(74) Vertreter : Rossel, Albert, Dipl.-Ing. ETH
Postfach
CH-8023 Zürich (CH)

**Beschreibung**

Die Erfindung betrifft eine Hubeinheit einer Rotations-Schaftmaschine, gemäss Oberbegriff der Patentansprüche 1 bezw. 2.

Derartige Hubeinheiten sind u. a. durch die CH-A-512 605, CH-A-522 057 und die DE-B-29 38 451 bekannt geworden. Ein Charakteristikum dieser Ausführungen besteht darin, dass der nicht arbeitende, d. h. nicht in der Nut der Antriebswelle in Eingriff stehende Schaltkeil von einer Arretiervorrichtung gehalten wird, die aus einer V-förmigen, ortsgebundenen Kerbe oder Nut mit federnden Seitenflächen besteht, welche Seitenflächen von speziellen, unter Federkraft stehenden Schiebern oder den Enden von zwei annähernd halbkreisförmigen, federnd montierten Leitschienen gebildet sind. Die u. a. aus Sicherheitsgründen gewählte, federnde Anordnung verhindert bei unvollständig in die Nut der Antriebswelle eingerasteten Schaltkeilen, z. B. fehlerhafter Steuerung, die Zerstörung eines Maschinenteils. Durch das elastische Ausweichen und Zurückfedern der seitlichen Kerbenbegrenzungen wird das äussere Ende des Schaltkeils der Kerbe oder der Nut zugeführt.

Damit bei der nächstfolgenden Steuerung des Schaltkeils, d. h. dem Ausrasten seines äusseren Endes aus der Kerbe und dem Einrasten seines inneren Endes in eine Nut der kurzfristig stillstehenden Antriebswelle, dieser nicht auf der starren Nutkante der Wellennut aufsitzt, sondern störungsfrei in die Nut gleitet, ist für die reguläre Arbeit einer Rotations-Hubeinheit das genaue Einhalten der vorgeschriebenen Lage der Kerbe oder der Nut und damit des Schaltkeils unbedingt erforderlich.

Bei den bekannten, einzeln federnd angeordneten Seitenflächen der V-Kerbe oder Nut besteht die Möglichkeit, dass die eine, die Seitenfläche begrenzende Kante der Kerbe durch eine relative Falschstellung des Keils etwas zurückgedrängt wird. Der Keil wird von der Kerbe nicht mehr genau auf die Wellennut ausgerichtet, so dass er nicht direkt und ungehemmt vollständig in die Nut der Antriebswelle einrasten kann, was eine Fehlsteuerung der Webmaschine zur Folge haben kann.

Ziel der Erfindung ist die Behebung dieses Nachteils durch Schaffung einer V-förmigen Kerbe zum Halten des äusseren Keilendes, welche Kerbe keine oder lediglich eine minimale Abweichung der Mittelachse des Keils von der radialen Richtung der Mittelachse des stillstehenden Nut der Antriebswelle zulässt. Gleichzeitig sollen aber auch die bekannten Mittel zur Vermeidung von Bruchschäden, bei anormaler Stellung des Keils, gewährleistet sein.

Dies wird erfindungsgemäss mit einer Hubeinheit der kennzeichnenden Merkmale der Patentansprüche 1 bezw. 2 erreicht.

Da der Rastblock in sich selbst keiner elastischen Verformung ausgesetzt ist, bleibt die Ausnehmung von stets gleichbleibender Form. Die aus bekannten Gründen geforderte Nachgiebigkeit bei Fehlsteuerungen wird durch Zurückweichen des ganzen Rastblockes, entgegen einer Federkraft, in annähernder Richtung der Mittelaxe der Ausnehmung, gewährleistet. Diesem Zweck dienen beispielsweise Führungen gemäss den Patentansprüchen 5 und 6.

In der Zeichnung sind verschiedene Ausführungsbeispiele von erfindungsgemässen Hubeinheiten für Rotations-Schaftmaschinen dargestellt. Es zeigen

Figur 1 schematisch einen Schnitt durch eine an eine Webmaschine anbaubare, bekannte Rotations-Schaftmaschine mit einer erfindungsgemässen Hubeinheit,

Figur 2 in grösserem Massstab den Rotationsteil dieser Hubeinheit,

Figur 3 in grösserem Massstab einen partiellen Schnitt nach der Linie III-III in Fig. 2,

Figur 4 eine der Fig. 2 entsprechende Darstellung einer Hubeinheit mit mangelhaft gesteuertem und bereits von der Antriebswelle mitgenommenem Schaltkeil,

Figur 5 eine Ausführungsvariante eines Rastblockes und dessen Befestigung, wobei der Schaltarm, zwecks Vereinfachung der Darstellung, weggelassen wurde,

Figur 6 einen Schnitt nach der Linie VI-VI in Fig. 5,

Figur 7 dieselbe Ausführung wie Fig. 5, jedoch in anormaler Stellung des Schaltkeils,

Figur 8 eine Hubeinheit mit Leit- und Sicherheitsschienen für den umlaufenden Schaltkeil und an den Schienenenden angelenkten Rastblöcken, im Moment der regulären Mitnahme des Schaltkeils durch die Antriebswelle, wobei der Schaltarm, zwecks Vereinfachung der Darstellung, weggelassen wurde,

Figur 9 dieselbe Hubeinheit, im Moment einer anormalen Stellung des von der Antriebswelle mitgenommenen Schaltkeils,

Figur 10 eine Hubeinheit mit einer weiteren Ausführungsvariante einer Rastblockanordnung, und

Figur 11 einen Schnitt nach der Linie XI-XI in Fig. 10.

Die intermittierend um 180° arbeitende Antriebswelle 1 ist im Gehäuse 2 gelagert und weist zwei einander gegenüberliegende Längsnuten 10 zur Aufnahme des inneren Endes 31 des Schaltkeils 3 auf. Der Aufnahme des äusseren Endes 34 des Schaltkeils dienen die ortsgebundenen Rastblöcke 6 mit ihren nutenförmigen Ausnehmungen 60, deren Offenseite gegen die Antriebswelle 1 zu gerichtet ist. Mustergemäss geführt wird der Schaltkeil 3 vom Ring 43 des Schaltarmes 4, welcher schwenkbar auf der gehäusefesten Achse 24 sitzt und über das Verbindungsstück 50 vom bekannten Steuerapparat 5 für Schaftmaschinen gesteuert wird. Der Ring des Schaltarmes gleitet in einer kreisbogenförmigen Führungsnut 35 des Schaltkeils 3, der in einer radialen Führungsnut 13 des auf der Antriebswelle 1 sitzenden, in einer Bohrung 12 der Kurbelstange 14 drehbar gelagerten Exzenterringes 11 gelagert ist. Ueber den Bolzen 15 wird die Bewegung der Kurbelstange auf den auf der gehäusefesten Achse 17 sitzenden Schwinghebel 16 übertragen. Am freien Ende des Schwinghebels ist der Verbindungsstab 18 zu den nicht gezeichneten Schäften oder Litzen angelenkt.

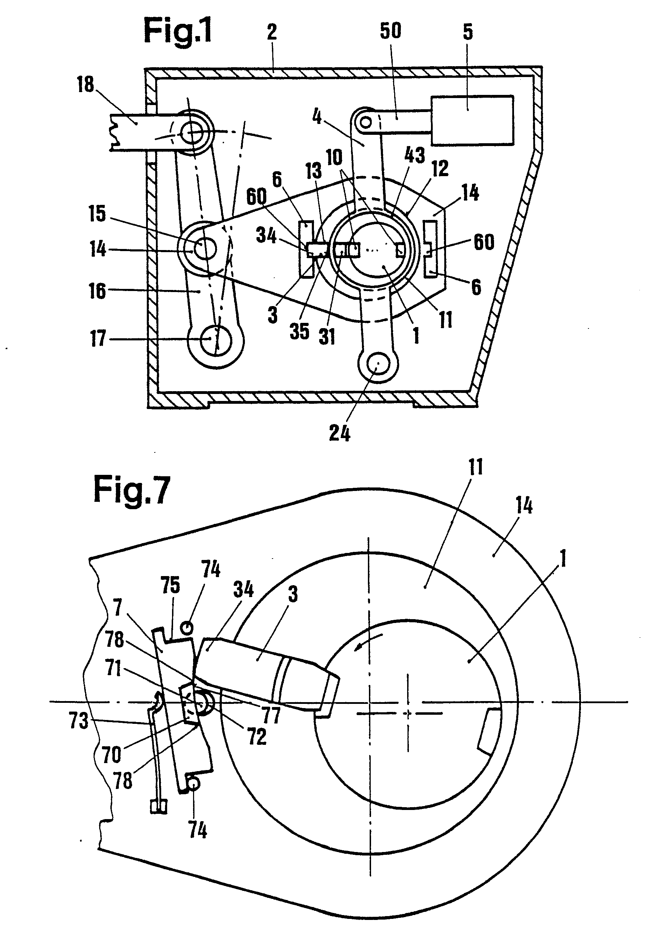

In Fig. 1 ist eine nicht arbeitende Hubeinheit gezeigt, deren Schaltarm 5 nach links geschwenkt ist und das innere Ende 31 des Schaltkeils 3 ausser Eingriff mit der Nut 10 der Antriebswelle gebracht hat. Das äussere Ende 34 des Schaltkeils 3 ist in die Ausnehmung 60 des auf der Kurbelstange 14 angebrachten Rastblockes 6 eingerastet. Der Schaltkeil 3 und damit der Exzenterring 11 sind gegen Verdrehung gesichert. Die Kurbelstange bleibt inaktiv und der angehängte Schaft verbleibt in seiner Stellung.

Zur Stellungsänderung des Schaftes wird der Schaltarm 4 in bekannter Weise, siehe CH-PS-512 605, im Uhrzeigersinn um seine Lagerachse 24 geschwenkt, wobei der Schaltkeil 3 nach rechts mitgenommen und mit seinem inneren Ende 31 in eine Nut 10 der Antriebswelle 1 einrastet. Bei der Weiterrotation der Antriebswelle 1 wird der Schaltkeil und damit der Exzenterring 11 bis zum nächsten Halt nach 180° mitgenommen. Die auf dem Exzenterring sitzende Kurbelstange 14 wird bei dieser Rotation nach rechts verschoben, wodurch der Schaft seine Stellung ändert.

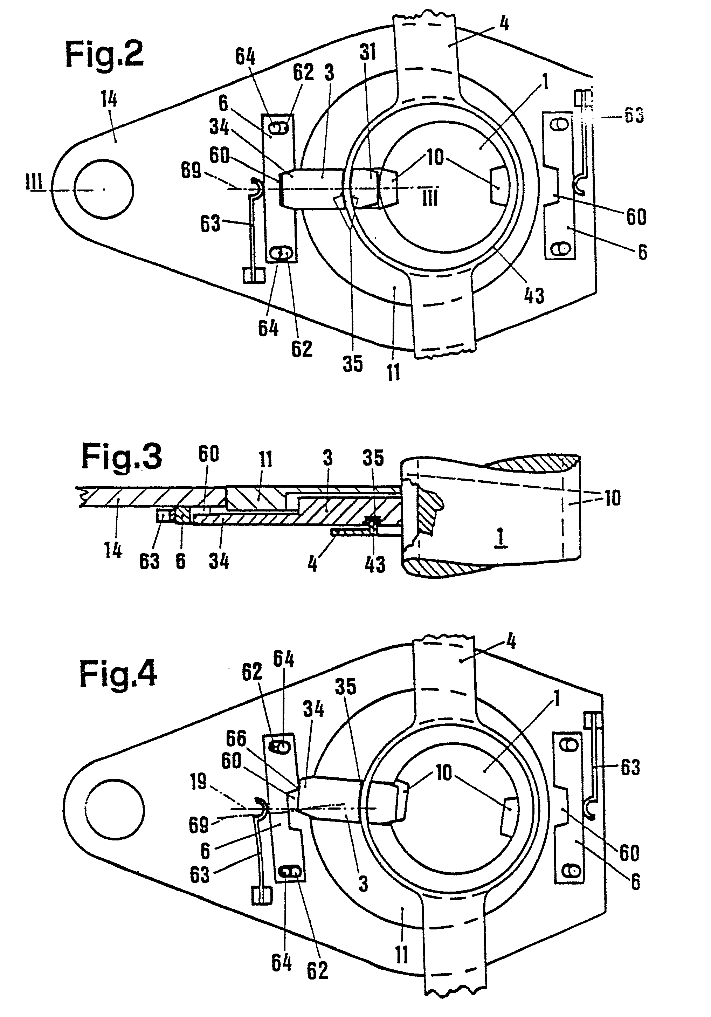

Anhand der in Fig. 2 bis 4 dargestellten, ersten Variante des erfindungswesentlichen Rastblockes 6 wird die Funktionsweise der Hubeinheit erläutert. Gehäuse, Steuerapparat, Betätigungshebel und Lagerachse des Schaltarms 4, sowie Schwinghebel mit Verbindungsstab, sind weggelassen.

Im Rastblock 6 befindet sich die Ausnehmung 60 zur Aufnahme des äusseren Endes 34 des Schaltkeils 3, wobei ihre Offenseite gegen die Antriebswelle zu gerichtet ist. Mit 69 ist die im Ruhezustand genau radial zur Antriebswelle 1 stehende Mittelachse dieser Ausnehmung bezeichnet. Der Rastblock 6 ist über die beiden Schlitze 62, in denen die Stifte 64 der Kurbelstange 14 gleitend eingreifen, auf der Kurbelstange ortsgebunden, jedoch begrenzt beweglich gelagert. Die Schlitze 62 verlaufen annähernd parallel zur Mittelachse 69 der Ausnehmung 6 oder sind leicht gegen den Mittelpunkt der Antriebswelle 1 zu gerichtet. Die an der Kurbelstange 14 befestigte Feder 63 drückt den Rastblock 6 in Richtung der Antriebswelle 1, wobei die Stifte 64 als Anschläge in den Schlitzen 62 wirken. Pro Hubeinheit sind zwei diametral zueinanderliegende Rastblöcke 6 angeordnet. Anstelle der Stifte 64 können auch Schrauben, Führungen oder dgl. als in die Schlitze 62 eingreifende Teile der Kurbelstange 14 angeordnet sein.

Fig. 2 zeigt den Schaltkeil 3 in Grundstellung, d. h. aus der Nut 10 der Antriebswelle 1 aus- und in die Ausnehmung 60 eingerastet. Die Antriebswelle 1 befindet sich in der Stillstandsphase. Bei ihrer nachfolgenden Rotation wird der Schaltkeil 3 nicht mitgenommen und der an der Hubeinheit angeschlossene Schaft nicht bewegt.

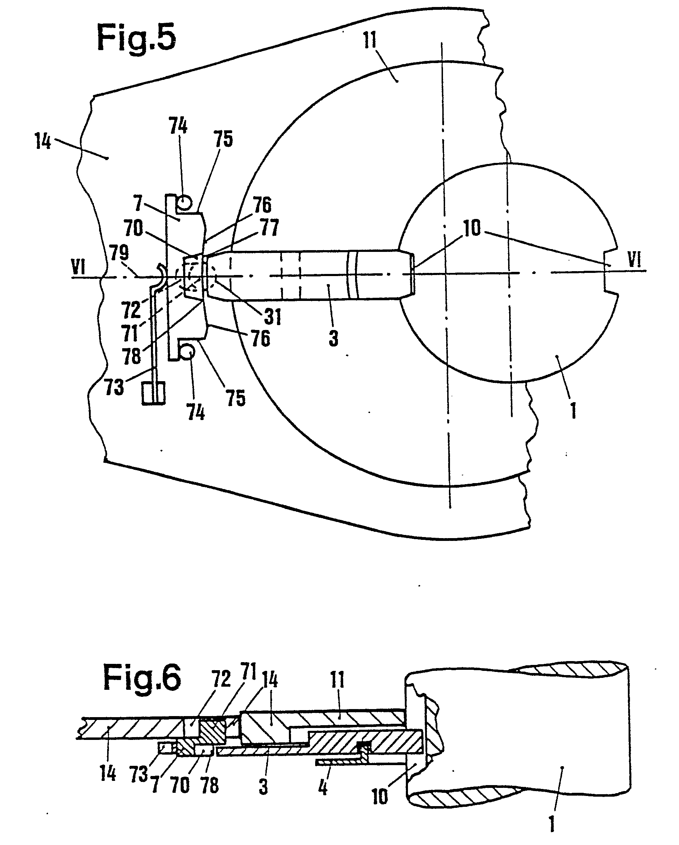

Soll nun der Schaft seine Stellung verändern, schwenkt der Schaltarm 4 und nimmt über seinen, in der Führungsnut 35 des Schaltkeils liegenden Ring 43, den Keil 3 mit. Das innere Ende 31 des Keils rastet in die Nut 10 der Antriebswelle 1 ein und sein äusseres Ende rastet aus der Ausnehmung 60 aus, welche Steuerstellung in den Fig. 5 und 6 gezeigt ist. Bei der Rotation der Antriebswelle 1 um 180° wird der Schaltkeil 3 und damit auch der Exzenterring 11 mitgenommen. Ueber diesen und die Kurbelstange 14, den Schwinghebel und den Verbindungsstab, wird der Schaft bewegt.

Sollte der Schaltkeil 3 aus irgend einem Grund mangelhaft gesteuert werden und bei Beginn der Drehung der Antriebswelle 1, in Pfeilrichtung (Fig. 4), gleichzeitig sowohl in der Nut 10 als auch in der Ausnehmung 60 einrasten, hätte dies, durch die Arbeitskraft der Antriebswelle, unweigerlich eine Sperrwirkung oder eine Zerstörung, z. B. Bruch irgend eines an der Bewegung beteiligten Teiles, zur Folge. Durch die begrenzt bewegliche Lagerung des Rastblockes 6 kann dieser nun, insbesondere auch dank des trapezförmigen äusseren Endes 34 des Schaltkeils 3, entgegen der Kraft der Feder 63 ausweichen. Man erhält die Stellung gemäss Fig. 4, in welcher der Keil 3 auf eine Seitenkante 66 der Ausnehmung 60 aufsitzt und nicht voll in die Nut 10 einrastet. Die Hubeinheit kann bei dieser Bewegung praktisch in der gezeigten Stellung weiterarbeiten. Es besteht jedoch ein unerwünschter Unsicherheitsfaktor.

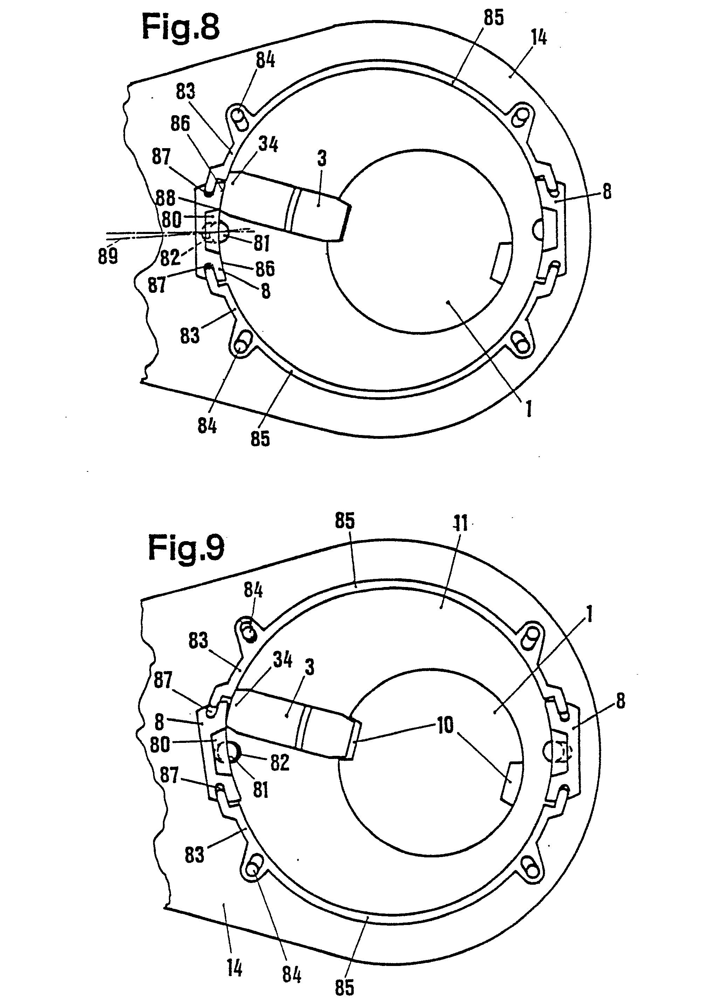

Gelangt nun der halb in die Nut 10 eingerastete Schaltkeil 3 kurz vor dem Ende der 180° Schwenkung zum gegenüberliegenden Rastblock 6, erfolgt auch dort keine Zerstörung eines Teils, da auch dieser Rastblock entgegen der Kraft der Feder 63 zurückweicht. Es wird diesbezüglich auf die späteren Ausführungen zu Fig. 7 verwiesen. Im kurzen Stillstand der Antriebswelle 1, nach ihrer 180° Rotation, wird das äussere Ende 34 des Keils 3, unter der Wirkung der Feder 63, wieder in der Ausnehmung 60 gefangen und so zentriert, dass er bei der nächsten Steuerung vor der Nut 10 steht und problemlos einrasten kann. Wichtig ist, dass sich die Mittelachse 69 der Ausnehmung beim Verdrängen des Rastblockes 6 nur unwesentlich zum Radius 19 der stillstehenden Antriebswelle neigt.

Eine Variante der Lagerung eines Rastblockes 7 an der Kurbelstange 14 ist den Fig. 5 bis 7 zu entnehmen. Der die wiederum nutenförmige Ausnehmung 70 aufweisende Rastblock 7 ist mit einem zentralen, in einen geradlinigen Schlitz 72 der Kurbelstange 14 eingreifenden Zapfen 71 versehen, wodurch der Rastblock in seiner Bewegung radial zur Antriebswelle und entgegen der Kraft der Feder 73, begrenzt ist.

Als Richtanschlag für die Grundstellung des Rastblockes 7 dienen die beiden, an den Seitenflächen 75 des Rastblockes anliegenden, an der Kurbelstange befestigten Stifte 74.

Bei anormaler Stellung des Schaltkeils, u. a. auch bei nicht vollständigem Ein- und Ausrasten, kann der Rastblock 7 bei der Rotation der Antriebswelle 1, entgegen der Kraft der Feder 73, rückwärts translatorisch oder schwenkend ausweichen, wobei die Eckkanten 78 der Ausnehmung 70, deren Verbindungslinie 77 durch den Mittelpunkt des Zapfens 71 führt, ständig symmetrisch zur Verbindungslinie zwischen dem Mittelpunkt des Zapfens und dem Mittelpunkt der Antriebswelle 1 bleiben.

Diese Ausweichbewegung findet auch dann statt, wenn — wie Fig. 7 zeigt — der Schaltkeil 3 von seiner Schwenkung mit der Antriebswelle in anormaler Stellung um 180°, gemäss Pfeil, auf eine die Ausnehmung 70 begrenzende Unterfläche 76 des Rastblockes 7 trifft. Die an die Ausnehmung 70 anschliessenden Unterflächen 76 sind vorzugsweise angeschrägt oder bogenförmig.

Führt die Verbindungslinie 77 der beiden Eckkanten 78 der Oeffnung der Ausnehmung 7 durch den Mittelpunkt des Zapfens 71, ergibt sich durch diese erzwungene Lagerung des Rastblockes 7 der Vorteil, dass die Oeffnung der Ausnehmung bei jeder Art des Einrastens des äusseren Endes 34 des Schaltkeils 3 genau symmetrisch zur Mittelaxe 79 bleibt und den sich in normaler Stellung befindlichen Schaltkeil in die Schaltstellung bringt. Durch die Symmetrie der Ausnehmung wird also auch der anormal gesteuerte Schaltkeil in die Normallage übergeführt.

Ist die Rotations-Hubeinheit, mindestens teilweise gemäss der CH-A-522 057 aufgebaut, d. h. sind, wie Fig. 8 und 9 zeigen, auf der Kurbelstange 14 halbkreisförmige, federnde, koaxial zum Lager zwischen Exzenterring 11 und Kurbelstange 14 verlaufende Leit- und Sicherungsschienen 85 angeordnet, können die um die benachbarten fixen Stifte 84 der Kurbelstange 14 federnd schwenkenden Enden 83 der Leitschienen 85 zur Führung und als Feder für den Rastblock 8 beigezogen werden.

Der Rastblock 8 weist ebenfalls eine Ausnehmung 80 zum Fangen des äusseren Endes 34 des Schaltkeils 3 auf. Zur Bewegungslagerung und -begrenzung ist der Rastblock 8, wie der Rastblock 7, mit einem in einen Schlitz 82 der Kurbelstange 14 eingreifenden Zapfen 81 versehen. An den Seitenflächen des Rastblockes 8 ist je eine Kerbe 87 angeordnet, in die je das freie federnde Ende 83 der Leitschiene 85 gleitbar eingreift. Dadurch wird der um den Zapfen 81 schwenkbare Rastblock in der vorgeschriebenen Stellung (Fig. 8) mit radial zur stillstehenden Antriebswelle 1 verlaufender Mittelachse 89 der Ausnehmung 80 gehalten, aus welcher Stellung ein problemloses Einrasten des gefangenen Schaltkeils in eine Nut 10 der stillstehenden Antriebswelle 1 erfolgt.

Fig. 8 zeigt den Normallauf der Hubeinheit. Der steuergemäss in die Nut 10 eingerastete Schaltkeil 3 wird von der Antriebswelle 1 mitgenommen. Das äussere Ende 34 des Schaltkeils gleitet an oder nahe der fluchtend mit der Innenkante der Leitschiene 85 liegenden Unterkante 86 des Rastblockes vorbei. Der Schaltkeil 3 ist bei seiner Schwenkung um 180° gesichert.

Die in Fig. 9 gezeigte Stellung ergibt sich, wenn der Schaltkeil im Bereich des rechten Rastblockes nicht voll in die Nut 10 der Antriebswelle 1 eingerastet und von der im Gegenuhrzeigersinn rotierenden Antriebswelle bis zur gezeichneten Stellung mitgenommen wurde. Dabei drückt der Schaltkeil die federnde Leitschiene 85 nach aussen, was aufgrund der Lagerung an den Stiften 84 möglich ist. Ueber das ebenfalls federnde, abgekröpfte, um den Stift 84 schwenkende Ende 83 der Leitschiene 85 wird dabei der in Fig. 8 dargestellte, oben liegende Teil des Rastblockes 8, mit dem Zapfen 81 als Drehpunkt, vom bei der Schwenkung der Antriebswelle 1 anormal ankommenden Schaltkeil 3 nach aussen geschwenkt, so dass das äussere Ende 34 des Schaltkeils 3 von der Leitschiene 83, 85 direkt auf die Unterkante 86 des Rastblockes gleitet und nach seinem Einrasten in die Ausnehmung 80, unter der Kraft der federnden Enden 83, zentriert gehalten wird. Die in Fig. 9 gezeigte Stellung ergibt sich ebenfalls, wenn der Schaltkeil im Bereich des linken Rastblockes nicht voll in die Nut 10 der Antriebswelle eingerastet ist und von der im Uhrzeigersinn rotierenden Antriebswelle 1 mitgenommen wird. Dabei stösst die trapezförmige Form des Schaltkeilendes 34 den Rastblock über die Eckkante 88 der Ausnehmung in die gezeichnete Lage. Gegen die eigene Federkraft wird das Ende 83 der Leitschiene ebenfalls hochgehoben, so dass der Schaltkeil 3 in seiner anormalen Stellung, ohne dass es zu einem Bruch kommt, weiterschwenken kann.

Bei allen vorbeschriebenen Ausführungsbeispielen sind die Rastblöcke 6, 7, 8 an den Pleuelstangen angeordnet. Sie können aber auch an einem Maschinenfestteil angeordnet sein.

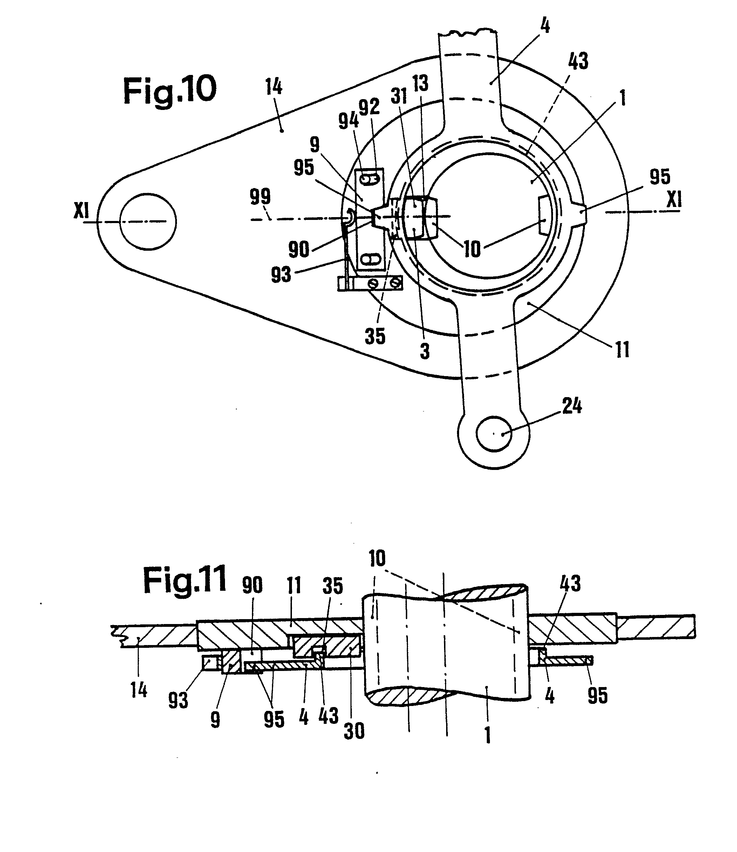

Gegenüber den bisher beschriebenen Ausführungsvarianten, bei denen je zwei Rastblöcke 6, 7 oder 8 je an der Kurbelstange 14 angebracht sind, ist im Beispiel nach den Fig. 10 und 11 nur ein, eine gegen die Antriebswelle 1 zu gerichtete Ausnehmung 90 aufweisender Rastblock 9 am Exzenterring angebracht und wie der Rastblock 6 über zwei Schlitze 92, in welche je ein Stift 94 des Exzenterringes 11 eingreift, gleitend gelagert. Der um das äussere, trapezförmige Ende gekürzte Schaltkeil 30 ist in einer radial verlaufenden Führung 13 im Exzenterring gleitend gelagert. Er weist lediglich noch das in eine der Nuten 10 der Antriebswelle 1 einrastende innere Ende 31 sowie eine Führungsnut 35 für den Ring 43 des Schaltarmes 4 auf. Radial vom Ring 43 abstehend sind zwei einander diametral gegenüberliegende Nocken 95 angebracht, die dem Einrasten in die Ausnehmung 90 des Rastblockes 9 und damit dem Festhalten des Rastblockes und des Exzenterringes in der gewünschten Stellung dienen. Ergänzt wird die Vorrichtung durch die am Exzenterring 11 befestigte und auf den Rastblock 9 wirkende Feder 93.

Der Schaltarm 4 wird in drei verschiedene Stellungen gesteuert bzw. geschwenkt, wo er während der Drehphase der Antriebswelle 1 um 180° blockiert bleibt. Bei der Drehphase der Antriebswelle, bei welcher der Schaltkeil 30 nicht in der Nut 10 eingerastet ist, wird der Exzenterring 11 über einen der beiden Nocken 95 des Schaltarmes 4 und über den Rastblock 9 blockiert. Die Kurbelstange 14 und damit der angehängte Schaft bewegen sich nicht.

Anstelle der Nocken 95 kann der Schaltkeil 30 von der Mitte der Antriebswelle 1 weg so verlängert sein, dass sein äusseres Ende in der gezeichneten Phase in die Ausnehmung 90 des Rastblockes 9 eingreift.

Bei allen beschriebenen Ausführungsvarianten können anstelle eines Schaltarmes mit einem Schaltring, wie dies in den CH-A-512 605 oder CH-A-522 057 beschrieben ist, zwei in die Führungsnut des Schaltkeils eingreifende, um 180° versetzte Einzelschaltarme mit Führungsnocken, gemäss der CH-A-559 260 oder ein hufeisenförmiger Schaltarm angeordnet sein. Die dem Einrasten des Endes 34 des Schaltkeils 3 dienende Ausnehmung 6, 7, 8, 9 kann anstatt trapezförmig rechteckig sein oder eine sich in der Tiefe erweiternde Oeffnung aufweisen, so dass bei Rastfunktion in allen Fällen nur die Aussenkanten der Oeffnung mit den Flanken des Schaltkeils in Berührung gelangen.

Mit sämtlichen vorbeschriebenen Vorrichtungen wird eine präzise Stellung des stillstehenden Schaltkeils erreicht, was ein schnelles und einwandfreies Einrasten des gesteuerten Schaltkeils in die Nut der Antriebswelle gewährleistet. Gleichzeitig werden aber auch event. auftretende anormale Stellungen des Schaltkeils ohne Beschädigung aufgefangen und bereinigt. Dieses Auffangen eines falsch gestellten oder mangelhaft gesteuerten Schaltkeils aus beiden Arbeitsrichtungen wird durch die Lagerung des Rastblockes erzielt, welche sein translatorisches und/oder schwenkendes Wegrücken, entgegen der Kraft einer Feder, in radialer Richtung zur stillstehenden Antriebswelle 1, gestattet, wobei sich die Ausnehmung und insbesondere ihre Oeffnung nur unwesentlich aus der Mittelachse bewegt. Bei der Schwenkbewegung des Rastblockes 6, 7, 8, 9 liegt ihr Mittelpunkt annähernd im Bereich der Mitte der Oeffnungsgrenze der entsprechenden Ausnehmungen 60, 70, 80, 90 der Rastblöcke und ist praktisch identisch mit der Mitte des äusseren Kopfes des Schaltkeils vor seinem Einrasten in die Ausnehmung. Dadurch ergibt eine Schrägstellung der Oeffnungslinie der Ausnehmung eine vernachlässigbare Einschränkung ihrer Oeffnungsbreite gegenüber dem Kopfende des Schaltkeils 3.

## Patentansprüche

1. Hubeinheit einer Rotations-Schaftmaschine, bestehend aus einem auf der Antriebswelle (1) sitzenden Exzenterring (11), in welchem ein Schaltkeil (3) radial hin- und herverschiebbar gelagert ist, welcher von einem Schaltarm (4) steuergemäss entweder in eine Nut (10) der intermittierend rotierenden Antriebswelle oder in eine ortsgebundene Ausnehmung (60) zum Einrasten gebracht wird, und einer auf dem Exzenterring gelagerten Kurbelstange (14), welche die Bewegung auf einen Schaft oder die Litzen einer Webmaschine überträgt, gekennzeichnet durch einen an einem Maschinenteil begrenzt beweglich gelagerten Rastblock (6, 7, 8), in welchem eine nutförmige Ausnehmung (60, 70, 80) mit starren Flanken und mit nach der Antriebswelle (1) zu gerichteter Oeffnung zur Aufnahme des äusseren Endes (34) des Schaltkeils (3, 30) angeordnet ist, an welchem Rastblock eine Feder (63, 73, 83) angreift, deren Kraft in Richtung der Antriebswelle gerichtet ist, wobei der Rastblock derart gelagert ist, dass die Mittelaxe (69, 79, 89) der Ausnehmung mit geringen Abweichungen gegenüber der Radiuslinie der stillstehenden Antriebswelle veränderbar ist und der Rastblock (6, 7, 8), entgegen der Kraft der Feder (63, 73, 83), begrenzt translatorisch und/oder schwenkend bewegbar ist.

2. Hubeinheit einer Rotations-Schaftmaschine, bestehend aus einem auf der Antriebswelle (1) sitzenden Exzenterring (11), in welchem ein Schaltkeil (3) radial hin- und herverschiebbar gelagert ist, welcher von einem Schaltarm (4) mittels dessen Ring (43) steuergemäss in eine Nut (10) der intermittierend rotierenden Antriebswelle zum Einrasten bringbar ist, und einer auf dem Exzenterring gelagerten Kurbelstange (14), welche die Bewegung auf einen Schaft oder die Litzen einer Webmaschine überträgt, gekennzeichnet durch einen am Exzenterring (11) begrenzt beweglich gelagerten Rastblock (9), in welchem eine nutförmige Ausnehmung (90) mit starren Flanken und mit nach der Antriebswelle (1) zu gerichteter Oeffnung zur Aufnahme eines äusseren Nockens (95) des Ringes (43) des Schaltarms (4) angeordnet ist, an welchem Rastblock eine Feder (93) angreift, deren Kraft in Richtung der Antriebswelle gerichtet ist, wobei der Rastblock derart gelagert ist, dass die Mittelaxe (99) der Ausnehmung in jeder Extremlage des Exzenterringes (11) mit geringen Abweichungen gegenüber der Radiuslinie der stillstehenden Antriebswelle veränderbar ist und der Rastblock (9), entgegen der Kraft der Feder (93), begrenzt translatorisch und/oder schwenkend bewegbar ist.

3. Rotations-Hubeinheit nach Anspruch 1, dadurch gekennzeichnet, dass zwei Rastblöcke (6, 7, 8) symmetrisch zur Antriebswelle (1) an der Kurbelstange (14) oder an einem Maschinenfestteil gelagert sind.

4. Rotations-Hubeinheit nach einem der Ansprüche 1 bis 3, dadurch gekennzeichnet, dass der Rastblock (6, 7, 8, 9) unter der Kraft der Feder (63, 73, 83, 93) gegen einen festen Anschlag (62, 64 ; 71, 72, 74, 75 ; 81, 82 ; 92, 94) anliegt und seine Lagerung (62, 64 ; 71, 72, 74, 75 ; 81, 82, 83, 87 ; 92, 94) ein translatorisches und/oder schwenkbar begrenztes Wegrücken vom festen Anschlag (64 ; 72, 74 ; 81, 82 ; 94) zulässt.

5. Rotations-Hubeinheit nach einem der Ansprüche 1 bis 4, dadurch gekennzeichnet, dass die Lagerung jedes Rastblockes (6, 7) aus zwei parallel zur Mittelaxe (69, 99) der Ausnehmung (60, 90) verlaufenden Schlitzen (62, 92) besteht, in welche an der Kurbelstange (14) bzw. am Exzenterring (11) befestigte Stifte (64, 94), Schrauben, Führungen oder dgl. gleitbar eingreifen.

6. Rotations-Hubeinheit nach einem der Ansprüche 1 bis 4, dadurch gekennzeichnet, dass die Lagerung jedes Rastblockes (7, 8) aus einem abstehenden Zapfen (71, 81) besteht, welcher in einen radial zur stillstehenden Antriebswelle (1) in der Kurbelstange (14) bzw. im Exzenterring (11) angeordneten Schlitz (72, 82) eingreift, wobei beidseitig des Rastblockes, unter Wahrung eines Abstandes, Führungen (74, 75 ; 83, 87) für den Rastblock angeordnet sind.

7. Rotations-Hubeinheit nach Anspruch 3 und 6, bei der im Bereich des Umlaufes des äusseren Endes (34) des Schaltkeils (3) auf der Kurbelstange (14) gegen die Antriebswelle (1) zu federnde, annähernd halbkreisförmige Leit- und Sicherungsschienen (85) angeordnet sind, dadurch gekennzeichnet, dass die freien Enden (83) der Leit- und Sicherungsschienen (85) als Führungen in Rastkerben (87) des Rastblockes (8) eingreifen und dadurch sowohl Führungen als auch gegen die Antriebswelle (1) zu pressende Federn sind.

8. Rotations-Hubeinheit nach einem der Ansprüche 1 bis 7, dadurch gekennzeichnet, dass die der Oeffnung der Ausnehmung (60, 70, 80, 90) benachbarten, der Antriebswelle (1) zugewandten Unterkanten (76, 86) des Rastblockes (6, 7, 8, 9) als schräg, kreisförmig oder konvex verlaufende Führungen für das zum Einrasten in die Ausnehmung bestimmte, äussere Ende (34) des Schaltkeils (3) ausgebildet sind.

9. Rotations-Hubeinheit nach einem der Ansprüche 1 bis 8, dadurch gekennzeichnet, dass die Rastblöcke (6, 7, 8, 9) eine begrenzte, translatorische Bewegung in radialer Richtung zur stillstehenden Antriebswelle (1) und eine schwenkende Bewegung, deren Mittelpunkt annähernd im Bereich der Mitte der Oeffnungsgrenze der Ausnehmungen (60, 70, 80, 90) der Rastblöcke liegen, ausführen.

## Claims

1. A lifting unit of a rotary dobby, comprising an eccentric hoop (11) which is mounted on the drive shaft (1) and in which a control key (3) is mounted for radial to and fro movement, said key being capable of being shifted, under the action of a control arm (4) either into engagement with a groove (10) in the intermittently rotating drive shaft or into engagement with a stationary recess (60), and a connecting rod (14) which is mounted on the eccentric hoop for the transmission of motion to a shaft of healds or to the healds of a loom, characterised by a detent block (6, 7, 8) which is mounted on a machine part for limited movement and in which there is provided a groove-shaped recess (60, 70, 80) with rigid sides and with an opening directed towards the drive shaft (1) to receive the outer end (34) of the control key (3, 30), on which detent block there acts a spring (63, 73, 83), the force of which is directed in the direction of the drive shaft, the detent block being mounted in such a manner that the centre axis (69, 79, 89) of the recess is variable with slight deviations in relation to the radius line of the stationary drive shaft and the detent block (6, 7, 8) is movable to a limited extent, in translation and/or pivotally, against the force of the spring (63, 73, 83).

2. A lifting unit of a rotary dobby, comprising an eccentric hoop (11) which is mounted on the drive shaft (1) and in which a control key (3) is mounted for radial to and fro movement, said key being shiftable under the action of a control arm (4), by means of its ring (43), into engagement with a groove (10) in the intermittently rotating drive shaft, and a connecting rod (14) which is mounted in the eccentric hoop for the transmission of motion to a shaft of healds or to the healds of a loom, characterised by a detent block (9) which is mounted on the eccentric hoop (11) for limited movement and in which there is provided a groove-shaped recess (90) with rigid sides and with an opening directed towards the drive shaft (1) to receive an outer cam (95) of the ring (43) of the control arm (4), on which detent block there acts a spring (93), the force of which is directed in the direction of the drive shaft, the detent block being mounted in such a manner that the centre axis (99) of the recess is variable, in each extreme position of the eccentric hoop (11), with slight deviations in relation to the radius line of the stationary drive shaft, and the detent block (9) is movable to a limited extent, in translation and/or pivotally, against the force of the spring (93).

3. A rotary lifting unit as claimed in Claim 1, characterised in that two detent blocks (6, 7, 8) are mounted symmetrically to the drive shaft (1) on the connecting rod (14) or on a fixed part of the machine.

4. A rotary lifting unit as claimed in any one of Claims 1 to 3, characterised in that the detent block (6, 7, 8, 9) bears against a fixed stop (62, 64 ; 71, 72, 74, 75 ; 81, 82, 92, 94) under the force of the spring (63, 73, 83, 93) and its mounting (62, 64 ; 71, 72, 74, 75 ; 81, 82, 83, 87 ; 92, 94) permits a limited movement, in translation and/or pivotally, away from the fixed stop (64 ; 72, 74 ; 81, 82 ; 94).

5. A rotary lifting unit as claimed in any one of Claims 1 to 4, characterised in that the mounting of each detent block (6, 7) consists of two slots (62, 92) which extend parallel to the centre axis (69, 99) of the recess (60, 90) and in which pins (64, 94) screws, guides or the like, secured to the connecting rod (14) or to the eccentric hoop (11), engage for sliding.

6. A rotary lifting unit as claimed in any one of Claims 1 to 4, characterised in that the mounting of each detent block (7, 8) consists of a projecting pin (71, 81) which engages in a slot (72, 82) provided radially to the stationary drive shaft (1) in the connecting rod (14) or in the eccentric hoop (11), guides (74, 75 ; 83, 87) for the detent block being disposed at each side of the detent block while maintaining a spacing.

7. A rotary lifting unit as claimed in Claim 6 when appended to Claim 3, wherein substantially semicircular guide and retaining rails (85), which spring towards the drive shaft (1), are disposed on the connecting rod (14) in the region of rotation of the outer end (34) of the control key (3), characterised in that the free ends (83) of the guide and retaining rails (85) engage as guides in detent notches (87) in the detent block and as a result are not only guides but also springs pressing against the drive shaft (1).

8. A rotary lifting unit as claimed in any one of Claims 1 to 7, characterised in that the lower edges (76, 86) of the detent block (6, 7, 8, 9), which edges are adjacent to the opening of the recess (60, 70, 80, 90) and face the drive shaft (1), are constructed in the form of obliquely, circularly or convexly extending guides for the outer end (34) of the control key (3), which end is adapted to engage in the recess.

9. A rotary lifting unit as claimed in any one of the Claims 1 to 8, characterised in that the detent blocks (6, 7, 8, 9) execute a limited translational movement in the radial direction in relation to the stationary drive shaft (1) and a pivotal movement, the centre of which lies substantially in the region of the centre of the opening limits of the recesses (60, 70, 80, 90) in the detent blocks.

**Revendications**

1. Appareil de levage d'une ratière rotative, comprenant une bague excentrée (11) calée sur l'arbre d'entraînement (1) et dans laquelle est montée, avec faculté de va-et-vient radial coulissant, une clavette d'enclenchement (3) qui est encliquetée par commande, par un bras de commande (4), soit dans une gorge (10) de l'arbre d'entraînement tournant par intermittence, soit dans un évidement stationnaire (60), ainsi qu'une bielle (14) qui est montée sur la bague excentrée et transmet le mouvement à un cadre ou aux lices d'un métier à tisser, caractérisé par un bloc d'encliquetage (6, 7, 8) monté avec faculté de mouvement limité sur une partie de la machine et dans lequel est ménagé un évidement en forme de gorge (60, 70, 80) doté de flancs rigides et d'une ouverture dirigée vers l'arbre d'entraînement (1), de manière à recevoir l'extrémité extérieure (34) de la clavette d'enclenchement (3, 30), bloc d'encliquetage avec lequel vient en prise un ressort (63, 73, 83) dont la force est appliquée en direction de l'arbre d'entraînement, le bloc d'encliquetage étant monté de telle sorte que l'axe médian (69, 79, 89) de l'évidement ne puisse être décalé qu'avec de faibles écarts par rapport à la ligne radiale de l'arbre d'entraînement immobile, et que le bloc d'encliquetage (6, 7, 8) puisse effectuer des mouvements de translation et/ou de pivotement limités, à l'encontre de la force du ressort (63, 73, 83).

2. Appareil de levage d'une ratière rotative, comprenant une bague excentrée (11) logée sur l'arbre d'entraînement (1) et dans laquelle est montée, avec faculté de va-et-vient radial coulissant, une clavette d'enclenchement (3) enclique-table par commande au moyen d'un bras de commande (4), par l'intermédiaire de la bague (43) de ce dernier, dans une gorge (10) de l'arbre d'entraînement tournant par intermittence, ainsi qu'une bielle (14) qui est montée sur la bague excentrée et transmet le mouvement à un cadre ou aux lices d'un métier à tisser, caractérisé par un bloc d'encliquetage (9) monté avec faculté de mouvement limité sur la bague excentrée (11) et dans lequel est ménagé un évidement (90) en forme de gorge doté de flancs rigides et d'une ouverture dirigée vers l'arbre d'entraînement (1), de manière à recevoir une came extérieure (95) de la bague (43) du bras de commande (4), bloc d'encliquetage avec lequel est en prise un ressort (93) dont la force est appliquée en direction de l'arbre d'entraînement, le bloc d'encliquetage étant monté de telle sorte que, dans chaque position extrême de la bague excentrée (11), l'axe médian (99) de l'évidement ne puisse être décalé qu'avec de faibles écarts par rapport à la ligne radiale de l'arbre d'entraînement immobile, et que le bloc d'encliquetage (9) puisse effectuer des mouvements de translation et/ou de pivotement limités, à l'encontre de la force du ressort (93).

3. Appareil de levage rotatif selon la revendication 1, caractérisé par le fait que deux blocs d'encliquetage (6, 7, 8) sont montés, symétriquement par rapport à l'arbre d'entraînement (1), sur la bielle (14) ou sur une partie fixe de la machine.

4. Appareil de levage rotatif selon l'une des revendications 1 à 3, caractérisé par le fait que le bloc d'encliquetage (6, 7, 8, 9) est appliqué, sous la force du ressort (63, 73, 83, 93), contre une butée fixe (62, 64 ; 71, 72, 74, 75 ; 81, 82 ; 92, 94), et son montage (62, 64 ; 71, 72, 74, 75 ; 81, 82, 83, 87 ; 92, 94) autorise un déport, par translation et/ou par pivotement limité, à l'écart de la butée fixe (64 ; 72, 74 ; 81, 82 ; 94).

5. Appareil de levage rotatif selon l'une des revendications 1 à 4, caractérisé par le fait que le système de montage de chaque bloc d'encliquetage (6, 7) se compose de deux coulisses (62, 92) qui s'étendent parallèlement à l'axe médian (69, 99) de l'évidement (60, 90), et dans lesquelles pénètrent, avec faculté de coulissement, des tétons (64, 94), des vis, des guides ou organes analogues respectivement fixés à la bielle (14) ou à la bague excentrée (11).

6. Appareil de levage rotatif selon l'une des revendications 1 à 4, caractérisé par le fait que le système de montage de chaque bloc d'encliquetage (7, 8) consiste en un tenon saillant (71, 81) qui s'engage dans une coulisse (72, 82) respectivement ménagée dans la bielle (14) ou dans la bague excentrée (11), radialement par rapport à l'arbre d'entraînement immobile (1), des guides (74, 75 ; 83, 87) destinés au bloc d'encliquetage étant disposés de part et d'autre de ce bloc d'encliquetage, en réservant un intervalle.

7. Appareil de levage rotatif selon les revendications 3 et 6, dans lequel des rails (85) de guidage et de sécurité approximativement semi-circulaires, cédant élastiquement en direction de l'arbre d'entraînement (1), sont disposés sur la manivelle (14) dans la zone de révolution de l'extrémité extérieure (34) de la clavette d'enclenchement (3), caractérisé par le fait que les extrémités libres (83) des rails (85) de guidage et de sécurité pénètrent, en tant que guides, dans des encoches d'encliquetage (87) du bloc d'encliquetage (8), en constituant par conséquent aussi bien des guides que des ressorts devant être pressés contre l'arbre d'entraînement (1).

8. Appareil de levage rotatif selon l'une des revendications 1 à 7, caractérisé par le fait que les faces inférieures (76, 86) du bloc d'encliquetage (6, 7, 8, 9), voisines de l'ouverture de l'évidement (60, 70, 80, 90) et tournées vers l'arbre d'entraînement (1), sont réalisées sous la forme de guides à étendue oblique, circulaire ou convexe, pour l'extrémité extérieure (34) de la clavette d'enclenchement (3) destinée à s'encliqueter dans l'évidement.

9. Appareil de levage rotatif selon l'une des revendications 1 à 8, caractérisé par le fait que les blocs d'encliquetage (6, 7, 8, 9) accomplissent un mouvement de translation limité dans le sens radial par rapport à l'arbre d'entraînement immobile (1), ainsi qu'un mouvement de pivotement dont le centre se trouve approximativement dans la région médiane de la limite d'ouverture des évidements (60, 70, 80, 90) des blocs d'encliquetage.

**Fig.1**

**Fig.7**

Fig.2

Fig.3

Fig.4

# Fig.5

# Fig.6

Fig.8

Fig.9

## Fig.10

## Fig.11